(19) **Europäisches Patentamt / European Patent Office / Office européen des brevets**

(11) **EP 3 776 106 B1**

(12) **EUROPÄISCHE PATENTSCHRIFT**

(45) Veröffentlichungstag und Bekanntmachung des Hinweises auf die Patenterteilung:
**19.02.2025 Patentblatt 2025/08**

(21) Anmeldenummer: **19711817.7**

(22) Anmeldetag: **18.03.2019**

(51) Internationale Patentklassifikation (IPC):
**G05B 17/02** (2006.01)

(52) Gemeinsame Patentklassifikation (CPC):
**G05B 17/02;** G05B 2219/32015; G06F 30/20;
G06F 2111/06

(86) Internationale Anmeldenummer:
**PCT/EP2019/025070**

(87) Internationale Veröffentlichungsnummer:
**WO 2019/185198 (03.10.2019 Gazette 2019/40)**

(54) **COMPUTERIMPLEMENTIERTES VERFAHREN ZUM DIMENSIONIEREN EINER PROZESSANLAGE**

COMPUTER-IMPLEMENTED METHOD FOR DIMENSIONING A PROCESS PLANT

PROCÉDÉ IMPLÉMENTÉ PAR ORDINATEUR POUR DIMENSIONNER UNE INSTALLATION DE PROCESSUS

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **27.03.2018 EP 18020115**

(43) Veröffentlichungstag der Anmeldung:
**17.02.2021 Patentblatt 2021/07**

(73) Patentinhaber: **Linde GmbH**
**82049 Pullach (DE)**

(72) Erfinder:
- **WINDMEIER, Christoph**
**82538 Geretsried (DE)**
- **LAUTENSCHLAGER, Tobias**
**82194 Gröbenzell (DE)**
- **WUNDERLICH, Bernd**
**82319 Starnberg (DE)**

(74) Vertreter: **Imhof, Dietmar**
**Linde GmbH**
**Intellectual Property EMEA**
**Dr.-Carl-von-Linde-Straße 6-14**
**82049 Pullach (DE)**

(56) Entgegenhaltungen:
- GADE PANDU RANGAIAH: "Multi-Objective Optimization in Chemical Engineering : Developments and Applications", 20 March 2013 (2013-03-20), pages 1 - 102, XP055508181, Retrieved from the Internet <URL:https://ebookcentral.proquest.com/lib/epo-ebooks/detail.action?docID=1158627&query=gade+pandu+rangaiah#goto_toc> [retrieved on 20180919]
- L A PAINTON ET AL: "Synthesizing optimal design configurations for a Brayton cycle power plant", COMPUTERS & CHEMICAL ENGINEERING - MAY 1994, 27 September 1993 (1993-09-27), pages 369 - 381, XP055508337, Retrieved from the Internet <URL:https://ac.els-cdn.com/0098135494880182/1-s2.0-0098135494880182-main.pdf?_tid=1fe20b9e-dfbd-4a68-b54c-b993feb932dc&acdnat=1537426912_24c19ff1086e18243e57d9eafef62dae> [retrieved on 20180920]

## Beschreibung

Die Erfindung betrifft ein Verfahren zum Dimensionieren und Errichten einer Prozessanlage zum Durchführen eines chemischen, verfahrenstechnischen Prozesses, nämlich einer Luftzerlegungsanlage oder einer Erdgasanlage zur Erdgasverflüssigung.

### Hintergrund der Erfindung

Im Zuge einer Planungs- bzw. Auslegungsphase wird eine Prozessanlage zunächst dimensioniert, bevor die Prozessanlage gemäß der entsprechenden gewählten Dimensionierung an einem entsprechenden Standort konstruiert bzw. errichtet und letztendlich in Betrieb genommen wird, um einen chemischen, verfahrenstechnischen Prozess durchzuführen.

Im Zuge eines Dimensionierens können insbesondere Größen der Prozessanlage, beispielsweise die Dimensionen bzw. Kapazitäten einzelner Elemente und Komponenten der Prozessanlage oder der spezifische Typ verschiedener Komponenten, gewählt werden, ebenso wie Prozessparameter, gemäß welchen der verfahrenstechnische Prozess letztendlich durchgeführt werden soll.

Im Rahmen von herkömmlichen Verfahren zum Planen, Konstruieren bzw. Dimensionieren von Prozessanlagen werden zumeist zunächst zu dimensionierende Parameter einer Prozessanlage an einem Auslegungsfall, üblicherweise Volllast, rechnerisch bestimmt. Anschließend erfolgt die Nachrechnung bzw. Überprüfung von weiteren Lastfällen in Abhängigkeit von diesem Auslegungsfall. Ist es nicht möglich alle relevanten Betriebsfälle mit dem Design des Auslegungsfalls zu betreiben, erfolgt zumeist eine Anpassung der dimensionierenden Parameter, so dass sich eine Betreibbarkeit der Anlage in allen berücksichtigen Fällen ergibt. Dies geschieht zumeist iterativ und manuell. Hierbei sind oftmals langwierige Iterationen notwendig, falls das gewählte Design nicht für alle spezifizierten Betriebsfälle betreibbar ist. Ein optimales Design, insbesondere für eine Vielzahl von zu berücksichtigenden Betriebsfällen, ist mit einer derartigen iterativen Methode oft nicht auffindbar, da das gewähltes Design vom optimalen Design für mehrere Betriebsfälle abweichen kann.

Beispielsweise beschreibt "Gade Pandu Rangaiah: "Multi-Objective Optimization in Chemical Engineering : Developments and Applications", 20. März 2013", eine sog. multikriterielle Optimierung ("multi-objective optimization", MOO) zur Simulation von verfahrenstechnischen Prozessen. Im Zuge eines derartigen MOO Verfahrens werden mehrere Optimierungen unterschiedlicher Funktionen durchgeführt, wobei gleichzeitig mehrere verschiedene Bedingungen erfüllt sein sollen. Im Zuge dieser multikriteriellen Optimierung soll eine Vielzahl von Funktionen bzw. Gleichungen [f1(x), ..., fn(x)] gleichzeitig optimiert werden, wobei eine Lösung F mit allen Vektoren x gefunden werden soll, welche alle vorgegebenen Bedingungen gleichzeitig erfüllen. Ein Satz von Werten von x soll gefunden werden, welcher einen bestmöglichen Kompromiss für alle Funktionen liefert. 1f

"Painton et al.: "Synthesizing optimal design configurations for a Brayton cycle power plant", 27. September 1993", beschreibt beispielsweise die Dimensionierung von Kernkraftwerken. Mit Hilfe eines sequentiellen modularen chemischen Prozesssimulators wird der Betrieb eines Kernkraftwerks simuliert, um das Kraftwerk bestmöglich zu dimensionieren.

### Offenbarung der Erfindung

Ausgehend von diesem Stand der Technik wird ein Verfahren nach Anspruch 1 vorgeschlagen. Vorteilhafte Ausführungsformen sind jeweils Gegenstand der Unteransprüche sowie der nachfolgenden Beschreibung.

Die Prozessanlage ist eine Luftzerlegungsanlage oder allgemein eine Fluidzerlegungsanlage oder eine Erdgasanlage. Der verfahrenstechnische Prozess ist demgemäß eine Luftzerlegung bzw. eine Erdgasverflüssigung.

Unter Dimensionieren der Prozessanlage sei in diesem Zusammenhang zu verstehen, dass konkrete Werte für Prozessanlagengrößen und/oder für Prozessparameter bestimmt werden, gemäß welchen die Prozessanlage konstruiert und gebaut werden soll und gemäß welchen der verfahrenstechnische, chemische Prozess in dieser Prozessanlage durchgeführt werden soll.

Im Rahmen der Erfindung wird für eine Prozessanlage eine Vielzahl von Prozesssimulationen simultan (nachfolgend auch parallel oder gleichzeitig genannt) durchgeführt, im Zuge derer jeweils der Prozess in der Prozessanlage für einen bestimmten Anwendungsfall in einer Recheneinheit bzw. einem Computer simuliert wird. Ein Anwendungsfall ist durch Werte von Prozessanlagengrößen und/oder Werte von Prozessparametern charakterisiert.

Unter Prozessanlagengrößen oder auch Auslegungsgrößen seien in diesem Zusammenhang Größen zu verstehen, welche die Prozessanlage und weiter insbesondere einzelne Komponenten der Prozessanlage beschreiben bzw. charakterisieren. Beispielsweise können diese Prozessanlagengrößen Dimensionen von verschiedenen Komponenten der Prozessanlage sein, z.B. Durchmesser, Länge, Höhe, Breite usw. Beispielsweise können diese Prozessanlagengrößen auch den konkreten Typ einzelner Komponenten bzw. Einheiten beschreiben, z.B. welche konkrete Pumpe verwendet wird oder welche konkrete Leistung diese Pumpe besitzt oder mit welchem konkreten Druck diese Pumpe ein Fluid beaufschlagt.

Veränderungen der Werte dieser Prozessanlagengrößen wirken sich insbesondere direkt auf den in der Prozessanlage durchgeführten verfahrenstechnischen Prozess aus. Verschiedene Werte für die Prozessanlagengrößen charakterisieren verschiedene Prozesstopologien bzw. Prozessanlagentopologien, und charakterisieren konkrete Ausgestaltung der Prozessanlage. Unter dem Begriff Prozesstopologie sei in diesem Kontext nicht nur die Art und Weise der Verschaltung unterschiedlicher verfahrenstechnischer Apparate zu verstehen, sondern der Begriff Prozesstopologie wird in diesem Zusammenhang zweckmäßigerweise ebenfalls für eine identische Verschaltung bei Variation von Ausführungsformen eines verfahrenstechnischen Apparats verwendet.

Unter Prozessparameter seien in diesem Zusammenhang Größen zu verstehen, welche direkt den verfahrenstechnischen Prozess beschreiben.

Diese Prozessparameter charakterisieren Betriebsfälle, gemäß welchen die Prozessanlage gefahren werden kann bzw. gemäß welchen der Prozess in der Prozessanlage durchgeführt wird. Verschiedene Werte der Prozessparameter charakterisieren verschiedene Prozessvarianten, gemäß welchen der verfahrenstechnische Prozess durchgeführt werden kann. Beispielsweise können diese Prozessparameter Edukt- und/oder Produktspezifikationen des verfahrenstechnischen Prozesses betreffen.

Eine Prozesssimulation für einen Anwendungsfall umfasst in einer üblichen Darstellungsform eine Vielzahl von Gleichungen, welche die Abläufe in der Prozessanlage beschreiben. Die Aufstellung eines solchen Gleichungssystems für einen Anwendungsfall und eine Anlage ist im Stand der Technik bekannt. Die Neuerung besteht nun darin, solche Gleichungen für mehrere unterschiedliche Betriebsfälle, aber dieselbe Anlage gleichzeitig zu lösen, indem diese in einem gemeinsamen Gleichungssystem abgebildet und dieses dann gelöst wird. Dadurch werden die Probleme im Stand der Technik überwunden. Es kann ein für alle berücksichtigten Betriebsfälle optimales Design aufgefunden werden. Dieses ergibt sich, indem anhand des Gesamtgleichungssystems optimale Werte für die Prozessanlagengrößen und/oder für die Prozessparameter derart bestimmt werden, dass wenigstens eine vorgegebene Bedingung erfüllt ist, z.B. eine Zielfunktion minimal wird.

Es wird somit ein Gesamtgleichungssystem gelöst, in welchem wenigstens zwei unterschiedliche Prozesssimulationen, nämlich unterschiedliche Lastsituationen bzw. Auslastungen, enthalten sind.

Dadurch, dass das Gesamtgleichungssystem eine Prozessanlage betrifft, ergeben sich neben freien Werten von Prozessanlagengrößen bzw. Prozessparameter, die zur Erfüllung der wenigstens einen vorgegebenen Bedingung unabhängig voneinander optimiert werden können, auch abhängige Werte von Prozessanlagengrößen bzw. Prozessparameter, welche jeweils von einem freien Wert abhängen. Dabei hängt ein abhängiger Wert einer Prozessanlagengröße bzw. eines Prozessparameters in einer Prozesssimulation von einem freien Wert einer (vorzugsweise derselben) Prozessanlagengröße bzw. eines (vorzugsweise desselben) Prozessparameters in einer anderen Prozesssimulation ab.

Für die optimale Wahl der freien Werte wird ein gradientenbasiertes Optimierungsverfahren verwendet, welches auf der Auswertung einer analytischen oder numerisch erzeugten Jakobi-Matrix beruht. Das sich ergebende Gesamtgleichungssystem zur Dimensionierung einer Prozessanlage im großtechnischen Anlagenbau liegt hierbei in der Größenordnung von hunderten bis zehntausenden Gleichungen.

Die abhängigen Werte ergeben sich aus den freien Werten gemäß vorhandener

Zusammenhänge. Abhängige Werte betreffen konstruktive Parameter, insbesondere die Prozessanlagengrößen. Der konstruktive Parameter ist zwar an und für sich variabel und der Optimierung einmal als freier Wert zugänglich, er muss dann aber in allen Prozesssimulationen gleich sein, weil sich die Anlagenkonstruktionen für unterschiedliche Betriebsfälle nicht ändert. Der Wert für den Parameter ist daher in den anderen Prozesssimulationen von dem ersten Wert abhängig, in diesem Fall identisch.

Auch solche Parameter werden nun übergreifend für alle betrachteten Prozesssimulationen optimiert. Durch die simultane Durchführung mehrerer Prozesssimulationen kann insbesondere auch der Einfluss solcher Parameter auf das Ergebnis unmittelbar erkannt werden.

Es wird der Vielzahl von Prozesssimulationen jeweils ein Gewichtungsfaktor zugeordnet, der das Gewicht (z.B. die Auftretenshäufigkeit bzw. Auftretenswahrscheinlichkeit) einer bestimmten Prozesssimulation bzw. des zugehörigen Anwendungsfalls am Gesamtbetrieb kennzeichnet. Dadurch können insbesondere häufig auftretende Betriebsfälle höher gewichtet werden als selten auftretende Betriebsfälle.

Durch die Gewichtungen der Prozessparameter bzw. der Werte der Prozessparameter selbst kann insbesondere vorgegeben werden, wie relevant einzelne Prozessparameter bzw. einzelne Werte verschiedener Prozessparameter sind. Beispielsweise kann vorgegeben werden, dass eine hohe Produktqualität eine größere Gewichtung besitzt als eine hohe Produktmenge.

Im Zuge der verschiedenen simultanen Prozesssimulationen werden die Prozessanlage bzw. die einzelnen Komponenten der Prozessanlage sowie die in diesen Komponenten stattfindenden chemischen Teilprozesse des verfahrenstechnischen Prozesses insbesondere modelliert bzw. theoretisch beschrieben. Insbesondere werden die einzelnen Komponenten der Prozessanlage bzw. die darin stattfindenden physikalischen und chemischen Teilprozesse mittels chemischer, physikalischer, mathematischer Gleichungen beschrieben.

Als Grundlage zur Beschreibung verfahrenstechnischer Apparate dienen beispielsweise Bilanzgleichungen für Masse, Spezies, Energie und Impuls, der 2. Hauptsatz der Thermodynamik, Transportgleichungen für Spezies, Energie und Impuls, stoffliche und chemische Gleichgewichtsbeziehungen bzw. Reaktionsgleichungen sowie empirische und semiempirische Korrelationsbeziehungen zwischen o.g. Aspekten oder logische Verknüpfungen von verschiedenen Prozessparametern.

Für eine detaillierte Beschreibung zur Abbildung verfahrenstechnischer Prozesse über mathematische Gleichungen wird an dieser Stelle beispielsweise verwiesen auf *"Kraume, Matthias: Transportvorgänge in der Verfahrenstechnik: Grundlagen und apparative Umsetzungen. Springer Vieweg, Berlin [u.a.], 2., bearb. Auflage, 2012. ISBN: 978-3-642-25148-1"*.

Zum Durchführen der simultanen Prozesssimulationen werden insbesondere Flussdiagramme ("flow sheet") verwendet. Mittels eines derartigen Flussdiagramms können die einzelnen Komponenten der Prozessanlage sowie ihre insbesondere fluid- und verfahrenstechnischen Verbindungen untereinander abgebildet werden. Entsprechende die Teilprozesse bzw. Komponenten charakterisierende chemische, physikalische, mathematische Gleichungen werden zweckmäßigerweise als Grundlage für derartige Flussdiagramme verwendet.

Eine konkrete Prozesssimulation bzw. ein konkretes Flussdiagramm mit konkreten Werten der einzelnen Prozessanlagengrößen stellt somit ein theoretisches Abbild bzw. Modell einer konkreten Prozessanlage dar. Mittels einer derartigen konkreten Prozesssimulation bzw. eines derartigen konkreten Flussdiagramms kann somit simuliert werden, wie der verfahrenstechnische Prozess auf unterschiedliche Weisen, also bei verschiedenen Werten der Prozessparameter in dieser konkreten Prozessanlage theoretisch abläuft.

Im Zuge der simultanen Prozesssimulationen kann somit insbesondere modelliert werden, dass in derselben Prozessanlage, also in einer Prozessanlage mit denselben konstanten Werten für die Prozessanlagengrößen und somit mit derselben Prozesstopologie, der Prozess auf unterschiedliche Prozessvarianten durchgeführt wird, also mit unterschiedlichen Werten einzelner Prozessparameter. Somit kann insbesondere erkannt werden, wie sich in derselben Prozessanlage Veränderungen von einzelnen Prozessparametern auswirken.

Ferner wird im Zuge der simultanen Prozesssimulationen zweckmäßigerweise eine Vielzahl verschiedener Prozesstopologien, also eine Vielzahl verschiedener Werte für die Prozessanlagengrößen, jeweils auf unterschiedliche Betriebsbedingungen hin untersucht. Somit kann insbesondere erkannt werden, wie sich Veränderungen von einzelnen Prozessparametern bei verschiedenen Prozesstopologien auf das Gesamtverfahren auswirken.

Durch die Gewichtungen der Prozessparameter bzw. der Werte der Prozessparameter kann insbesondere bewertet werden, wie relevant die Auswirkungen auf den Prozess bei einer Veränderung der Werte der Prozessparameter sind. Zweckmäßigerweise sind Korrelationen der Veränderungen von Prozessanlagengrößen und Prozessparametern parallel bzw. simultan in den einzelnen Prozesssimulationen implementiert.

Insbesondere sind Korrelationen bzw. Abhängigkeiten einzelner Betriebsfälle bzw. einzelner Prozessvarianten untereinander implementiert.

Aus dieser Vielzahl von voneinander abhängigen bzw. miteinander korrelierenden Prozesssimulationen wird im Rahmen des Verfahrens ein optimaler Satz an Werten für die Prozessanlagengrößen und/oder die Prozessparameter bestimmt und ausgewählt. Die Bestimmung dieser optimalen Werte wird derart durchgeführt, dass wenigstens eine vorgegebene Bedingung erfüllt ist. Diese Bedingungen können insbesondere von verschiedenen Faktoren abhängen, welche insbesondere eine Wirtschaftlichkeit und Effektivität der Prozessanlage beschreiben. Beispielsweise kann diese Bedingung als eine Zielfunktion implementiert werden, wobei sämtliche Prozesssimulationen parallel und insbesondere simultan über diese Zielfunktion optimiert werden.

Insbesondere werden somit im Rahmen des Verfahrens ein optimaler Satz von Werten für die Prozessanlagengrößen und ein optimaler Satz von Werten für die Prozessparameter in Abhängigkeit voneinander simultan bestimmt. Zweckmäßigerweise werden somit eine optimale Topologie für die Prozessanlage sowie eine für diese Topologie optimale Prozessvariante bestimmt. Es werden die optimalen Werte für die Prozessanlagengröße und die Prozessparameter derart bestimmt, dass eine optimierte Prozessanlage konstruiert werden kann und dass der Prozess in dieser Prozessanlage möglichst effektiv und möglichst wirtschaftlich bzw. nach den gewählten Kriterien durchgeführt werden kann.

Das Verfahren wird durchgeführt, bevor die Prozessanlage konstruiert bzw. gebaut wird, beispielsweise im Zuge einer Planungsphase der Prozessanlage. Insbesondere kann zu Beginn der Planungsphase lediglich vorgegeben sein, welcher verfahrenstechnische, chemische Prozess von der Prozessanlage durchzuführen sein soll, nämlich eine Luftzerlegung oder Erzeugung von flüssigem Erdgas, und an welchem Standort die Prozessanlage entstehen soll, also unter welchen Umgebungsbedingungen der Prozess in der Prozessanlage durchgeführt werden soll. Im Zuge der Planungsphase kann zunächst eine grundsätzliche Anlagentopologie basierend z.B. auf Erfahrungswerten zugrunde gelegt werde, welche dann, insbesondere im Zuge des vorliegenden Verfahrens, so konkretisiert wird, dass diese an ihrem entsprechenden Standort möglichst effektiv und möglichst wirtschaftlich nach den im konkreten Fall gewählten Kriterien betrieben werden kann.

Im Gegensatz zu den einleitend beschriebenen herkömmlichen Verfahren wird im Rahmen der Erfindung eine Vielzahl von verschiedenen Prozesssimulationen simultan durchgeführt, welche voneinander abhängen und miteinander korrelieren. Auswirkungen von Wertveränderungen in einer Prozesssimulation werden zweckmäßigerweise parallel und simultan in den übrigen Prozesssimulationen berücksichtigt. Somit sind keine manuellen, langwierigen Iterationen notwendig. Die Erfindung erlaubt die Ermittlung von zu dimensionierenden Größen und die Optimierung einer komplexen Prozessanlage unter simultaner Berücksichtigung einer Vielzahl von Betriebsfällen. Derartige komplexe Prozessanlagen weisen insbesondere hochgradige thermische und/oder stoffliche Rückkopplungen auf sowie ein stark reales Stoffverhalten mit Phasenübergängen, also kein Idealgasverhalten, und insbesondere Abweichungen in den Spezifikationen von Edukten und/oder Produkten und/oder Umgebungsbedingungen für verschiedene Betriebsfälle.

Die bestimmten optimalen Werte für die Prozessanlagengrößen sind zweckmäßigerweise optimal auf die gewählten Betriebsfälle und deren Gewichtung ausgelegt. Ferner werden die optimalen Werte für die Prozessanlagengrößen und Prozessparameter zweckmäßigerweise so gewählt, dass die Prozessanlage ein breites Wirkungsgradspektrum über mehrere Betriebsfälle erhält. Bei einer wirtschaftlichen Anlagenlebensdauer von 20 bis 35 Jahren wird in der Praxis mit hoher Wahrscheinlichkeit ein breites Spektrum an Lastfällen gefahren.

Als Prozessparameter werden vorteilhafterweise eine oder mehrere der folgenden Größen verwendet: eine Produktmenge, eine Produktqualität, eine Eduktmenge, eine Eduktqualität, eine Umgebungsbedingung, ein Energiepreis, eine Vergütungsbedingung, insbesondere für Bereitstellungen von Energiesystemdienstleistungen, eine Verfügbarkeit von Komponenten der Prozessanlage, bauliche oder transportbedingte Randbedingungen an die verfahrenstechnischen Komponenten. Durch Verändern der Werte derartiger Prozessparameter, insbesondere von Produktmenge und -qualität sowie Eduktmenge und -qualität, kann insbesondere eine Vielzahl verschiedener Produkt- und Eduktbedingungen berücksichtigt werden.

Vorzugsweise hängt die wenigstens eine vorgegebene Bedingung von wenigstens einer Kostengröße ab. Als Kostengröße sind insbesondere Größen zu verstehen, auf die hin der Betrieb der Anlage optimiert werden soll, insbesondere um eine möglichst hohe Effektivität und Wirtschaftlichkeit der Prozessanlage zu ermöglichen.

Die wenigstens eine vorgegebene Bedingung ist vorteilhafterweise erfüllt, wenn die wenigstens eine Kostengröße eine Schwelle nicht über- oder unterschreit und/oder möglichst groß oder möglichst klein ist. Somit kann ein effektiver und wirtschaftlicher Betrieb der Prozessanlage erreicht werden. Insbesondere sollen auch mehrere solcher Randbedingungen gleichzeitig eingehalten werden, so dass eine Mehrgrößenoptimierung vorliegt.

Bevorzugt werden eine oder mehrere der folgenden Größen als die wenigstens eine Kostengröße verwendet: ein Bedarf an Betriebsmitteln, ein Bedarf an Energie, ein Produktbedarf, eine Eduktverfügbarkeit, Betriebskosten, Investitionskosten, Einhaltung von Baubarkeitsbeschränkungen, Produktausbeuten, Einsatzstoffmengen, eine Prozessanlagenbelastung, eine Prozessanlagenlebensdauer. Eine Minimierung bzw. Maximierung bzw. das nicht Über- oder Unterschreiten einer Schwelle derartiger Kostengrößen wirkt sich somit insbesondere auf die Wirtschaftlichkeit und Effektivität der Prozessanlage aus.

Vorteilhafterweise werden als Prozessanlagengrößen eine oder mehrere eine Fluidströmung durch die Prozessanlage beeinflussende Größen verwendet, insbesondere ein Strömungsquerschnitt und/oder ein Durchmesser eines Elements der Prozessanlage, z.B. von Rohrleitungen und/oder Apparaten. Druckverluste in Rohrleitungen und Apparaten sind in erster Näherung insbesondere von der Strömungsgeschwindigkeit abhängig. Als optimale Werte für derartige Prozessanlagengrößen werden Strömungsquerschnitte insbesondere entweder frei oder aus Katalogen von definierten Durchmessern bestimmt.

Zur Verdeutlichung der Unterscheidung zwischen freien und abhängigen Werten wird nachfolgend die Bestimmung eines optimalen Rohrleitungsdurchmessers herangezogen. Generell folgt ein Rohrleitungsdruckverlust $\Delta p$ der physikalischen Gesetzmäßigkeit:

$$\Delta p = \zeta/2 \cdot \rho \cdot v^2$$

mit der Fluiddichte $\rho$, der Strömungsgeschwindigkeit $v$ und dem Rohreibungswiderstand $\zeta$, der z.B. für den laminaren Fall als

$$\zeta = 64 \cdot \eta/(\rho \cdot v \cdot D)$$

definiert ist. Hierbei ist $\eta$ die dynamische Viskosität und $D$ der Durchmesser der Rohrleitung.

Bei der parallelen Simulation von n Anwendungsfällen ergeben sich folgende n Gleichungen zur Bestimmung des jeweiligen Rohrleitungsdruckverlusts $\Delta p_n$

$$\Delta p_n = 32 \cdot \eta_n/D_n \cdot v_n$$

Um simultan ein und dieselbe Anlage zu berechnen, müssen alle Durchmesser $D_n$ denselben Wert haben, der nachfolgend als $D_1$ bezeichnet wird und ein freier Wert für die Dimensionierung der Prozessanlage ist. In Abhängigkeit von der Wahl dieses freien Wertes ergeben sich für die anderen simultan berechneten Simulationen wiederum feste Berechnungsvorschriften für den Druckverlust der Form $\Delta p_n = f(\eta_n, D_1, v_n)$. Gemäß der eingeführten Terminologie entsprechen die Werte $D_2...D_n$ abhängigen Werten.

Alternativ oder zusätzlich werden als Prozessanlagengrößen eine oder mehrere einen Wärmeübertrager der Prozessanlage charakterisierende Größen verwendet, insbesondere eine gesamte Wärmeübertragerfläche und/oder eine Aufteilung von Wärmeübertragerflächen zwischen Seitenabzügen. Ein Wärmeübergangskoeffizient ist in erster Näherung insbesondere von der Strömungsgeschwindigkeit und damit dem Durchsatz, sowie der Zusammensetzung der Ströme in dem Wärmeübertrager abhängig. Die relative, geometrische Lage von Seitenabzügen ist insbesondere konstant. Auch für diese Prozessanlagengrößen können ein freier und n-1 abhängige Werte definiert werden.

Alterativ oder zusätzlich werden als Prozessanlagengrößen vorzugsweise eine oder mehrere Dimensionen der Prozessanlage verwendet, insbesondere ein Kolonnendurchmesser und/oder eine Kolonnenhöhe. Auch für diese Prozessanlagengrößen können ein freier und n-1 abhängige Werte definiert werden. Wirksamkeiten von Stoffübergängen sind insbesondere von der Gas- und Flüssigkeitsbelastung und -zusammensetzung abhängig, Druckverluste insbesondere von der Strömungsgeschwindigkeit und der theoretischen Bodenzahl.

Alternativ oder zusätzlich werden als Prozessanlagengrößen eine oder mehrere einen Wirkungsgrad des Prozesses beeinflussenden Größen verwendet, insbesondere ein Designpunkt der Prozessanlage und deren Komponenten, vorzugsweise ein Massenstrom, ein Saugdruck, ein Enddruck, eine Eintrittstemperatur usw. Der Wirkungsgrad ist insbesondere vom Massenstrom, dem Saug- sowie Enddruck und von der Eintrittstemperatur abgängig. Insbesondere werden zu diesem Zweck Interpolationen mittels dimensionsloser Maschinenkennfelder durchgeführt. Vorteilhafterweise sind Randbedingungen für Komponenten der Prozessanlage vorgegeben. Diese Randbedingungen werden zweckmäßigerweise im Zuge der simultanen Prozesssimulationen und der Bestimmung der optimalen Werte berücksichtigt. Insbesondere kann durch diese Randbedingungen der Betrieb verschiedener Komponenten der Prozessanlage in technisch realisierbaren Bereichen vorgegeben werden. Vorzugsweise werden eine oder mehrere der folgenden Größen als derartige Randbedingungen vorgegeben: thermische Spannungen in Wärmeübertragern, hydraulische Begrenzungen unterschiedlicher verfahrenstechnischer Apparate, z.B. Flutpunkte von Kolonneneinbauten, Pump- und Belastungsgrenzen sowie spezifische Drehzahlen von Maschinen.

Die Prozessanlage ist eine Fluidzerlegungsanlage, nämlich eine Luftzerlegungsanlage. Der chemische, verfahrenstechnische Prozess ist somit eine Fluidzerlegung nämlich eine Luftzerlegung. Eine Luftzerlegungsanlage weist als Komponenten insbesondere Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssiger Sauerstoff, LOX, gasförmiger Sauerstoff, GOX, flüssiger Stickstoff, LIN und/oder gasförmiger Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein. Destillationssäulen werden auch als Destillationskolonnen bezeichnet. Im Rahmen des Verfahrens können zweckmäßigerweise einzelne oder insbesondere alle derartigen Komponenten der Luftzerlegungsanlage sowie die darin stattfindenden Teilprozesse dimensioniert werden. Beispielsweise kann im Rahmen der Erfindung eine Dimensionierung einer Destillationskolonne einer Fluidzerlegungsanlage durchgeführt werden. Als Prozessanlagengröße kann dabei unter anderem beispielsweise eine Einsatzfluidstromdurchflussrate, welche insbesondere mittels Ansteuerung einer Verdichtereinheit veränderbar ist, berücksichtigt werden. Eine Modellierung einer Destillationskolonne kann insbesondere gemäß dem in der Anmeldung EP17020477.0 oder DE102017010787.4 beschriebenen Verfahren erfolgen.

Die Prozessanlage ist eine Erdgasanlage und der chemische, verfahrenstechnische Prozess ist eine Erdgasverflüssigung oder Erdgaszerlegung.

Im Rahmen des Verfahrens können beispielsweise besonders variierende Spezifikationen von Produkten, insbesondere Mengen und Zusammensetzungen, und Edukten, insbesondere Mengen, Zusammensetzungen und Eintrittsbedingungen, berücksichtigt werden.

Insbesondere können im Rahmen des Verfahrens ein Design und/oder eine Optimierung kombinierter Erdgasanlagen durchgeführt werden. In derartigen kombinierten Erdgasanlagen sind mindestens zwei Prozessschritte gekoppelt. Ein derartiger Prozessschritt kann beispielsweise die Abtrennung von Schwersiedern sein, insbesondere von $C_{2+}$ oder $C_{3+}$, zur Erzeugung von LPG (Liquefied Petroleum Gas). Ein weiterer derartiger Prozessschritt kann die Abtrennung von Stickstoff und/oder Helium sein, beispielsweise mittels einer sog. 'Nitrogen Rejection Unit' (NRU), was den Stickstoffgehalt im Erdgas auf unter ein Prozent reduzieren kann. Ein weiterer Prozessschritt kann die Verflüssigung eines Erdgasstroms zur Erzeugung von flüssigem Erdgas (LNG, Liquefied Natural Gas) sein.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben. Kurze Beschreibung der Zeichnungen

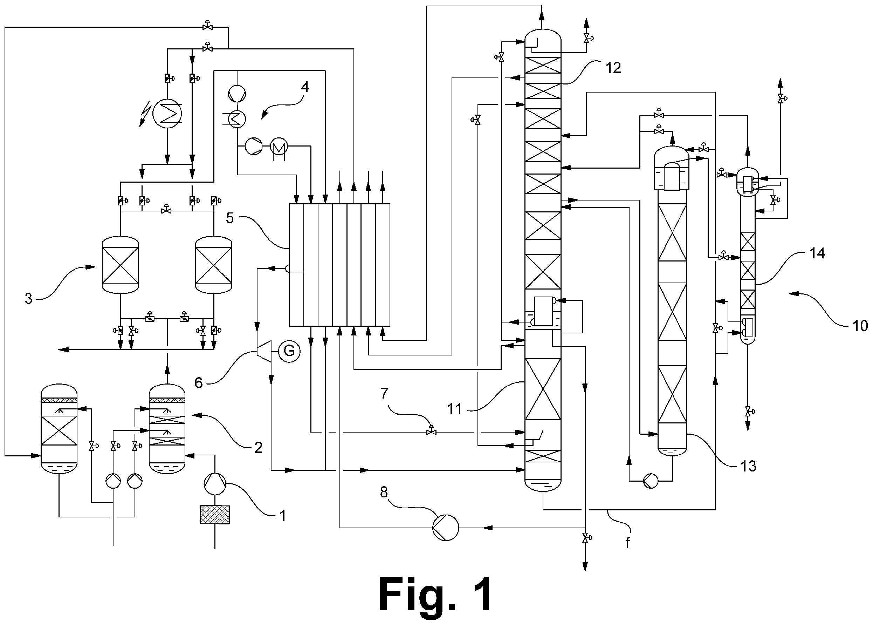

Figur 1     zeigt schematisch eine Prozesssimulation einer Prozessanlage, wie sie im Zuge einer bevorzugten Ausführungsform eines erfindungsgemäßen Verfahrens erstellt werden kann.

Ausführliche Beschreibung der Zeichnungen

Im Rahmen einer bevorzugten Ausführungsform eines erfindungsgemäßen Verfahrens soll eine Prozessanlage, nämlich eine Luftzerlegungsanlage, dimensioniert werden.

Dabei wird in einer Recheneinheit bzw. einem Computer simultan eine Vielzahl von Prozesssimulationen durchgeführt, im Zuge derer jeweils der Prozess der Luftzerlegung in der Luftzerlegungsanlage jeweils für einen Anwendungsfall, welcher durch Werte von Prozessanlagengrößen und Werte von Prozessparametern charakterisiert ist, simuliert wird.

Im Zuge jeder dieser Prozesssimulationen wird jeweils ein Prozessflussdiagramm ("flow sheet") verwendet, welches die Luftzerlegungsanlage modelliert. Die Luftzerlegungsanlage bzw. deren einzelne Komponenten sowie die in den einzelnen Komponenten stattfindenden Teilprozesse der Luftzerlegung werden dabei durch chemische, physikalische, mathematische Zusammenhänge in Form von Gleichungen theoretisch beschrieben. Die grundsätzliche zugrunde zu legende Topologie kann beispielsweise aus Erfahrungswerten gewonnen werten.

Ein Beispiel einer derartigen Prozesssimulation, wie sie im Zuge einer bevorzugten Ausführungsform des erfindungsgemäßen Verfahrens erstellt werden kann, ist in Figur 1 schematisch dargestellt.

Die in dem Flussdiagramm simulierte Luftzerlegungsanlage verfügt unter anderem über einen Hauptluftverdichter 1, eine Vorkühleinrichtung 2, ein Reinigungssystem 3, eine Nachverdichteranordnung 4, einen Hauptwärmetauscher 5, eine Entspannungsturbine 6, eine Drosseleinrichtung 7, eine Pumpe 8 und ein Destillationssäulensystem 10. Das Destillationssäulensystem 10 umfasst im dargestellten Beispiel eine klassische Doppelsäulenanordnung aus einer Hochdrucksäule 11 und einer Niederdrucksäule 12 sowie eine Rohargonsäule 13 und eine Reinargonsäule 14.

In der simulierten Luftzerlegungsanlage wird im Zuge einer simulierten Luftzerlegung ein Einsatzluftstrom mittels des Hauptluftverdichters 1 über ein nicht bezeichnetes Filter angesaugt und verdichtet. Der verdichtete Einsatzluftstrom wird der mit Kühlwasser betriebenen Vorkühleinrichtung 2 zugeführt. Der vorgekühlte Einsatzluftstrom wird in dem Reinigungssystem 3 aufgereinigt. In dem Reinigungssystem 3, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 3 wird der Einsatzluftstrom in zwei Teilströme aufgeteilt. Einer der Teilströme wird auf dem Druckniveau des Einsatzluftstroms in dem Hauptwärmetauscher 5 vollständig abgekühlt. Der andere Teilstrom wird in der Nachverdichteranordnung 4 nachverdichtet und ebenfalls in dem Hauptwärmetauscher 5 abgekühlt, jedoch nur auf ein Zwischentemperaturniveau. Dieser sogenannte Turbinenstrom wird nach der Abkühlung auf das Zwischentemperaturniveau mittels der Entspannungsturbine 6 auf das Druckniveau des vollständig abgekühlten Teilstroms entspannt, mit diesem vereinigt, und in die Hochdrucksäule 11 eingespeist.

In der Hochdrucksäule 11 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdrucksäule 11 abgezogen, teilweise als Heizmedium in einem Sumpfverdampfer der Reinargonsäule 14 verwendet und jeweils in definierten Anteilen in einen Kopfkondensator der Reinargonsäule 14, einen Kopfkondensator der Rohargonsäule 13 sowie die Niederdrucksäule 12 eingespeist. In den Verdampfungsräumen der Kopfkondensatoren der Rohargonsäule 13 und der Reinargonsäule 14 verdampfendes Fluid wird ebenfalls in die Niederdrucksäule 12 überführt.

Vom Kopf der Hochdrucksäule 11 wird das gasförmige stickstoffreiche Kopfprodukt abgezogen, in einem Hauptkondensator, der eine wärmetauschende Verbindung zwischen der Hochdrucksäule 11 und der Niederdrucksäule 12 herstellt, verflüssigt, und in Anteilen als Rücklauf auf die Hochdrucksäule 11 aufgegeben und in die Niederdrucksäule 12 entspannt.

In der Niederdrucksäule 12 werden eine sauerstoffreiche flüssige Sumpffraktion sowie eine stickstoffreiche gasförmige Kopffraktion gebildet. Erstere wird teilweise in der Pumpe 8 flüssig auf Druck gebracht, in dem Hauptwärmetauscher 5 erwärmt, und als Produkt bereitgestellt. Aus einer Flüssigkeitsrückhalteeinrichtung am Kopf der Niederdrucksäule 12 wird ein flüssiger stickstoffreicher Strom abgezogen und als Flüssigstickstoffprodukt aus der Luftzerlegungsanlage ausgeführt werden. Ein vom Kopf der Niederdrucksäule 12 abgezogener gasförmiger stickstoffreicher Strom wird durch den Hauptwärmetauscher 5 geführt und als Stickstoffprodukt auf dem Druck der Niederdrucksäule 12 bereitgestellt. Aus der Niederdrucksäule 12 wird ferner ein Strom aus einem oberen Bereich abgezogen und nach Erwärmung in dem Hauptwärmetauscher 5 als sogenannter Unreinstickstoff in der Vorkühleinrichtung 2 bzw. nach einer Aufheizung mittels eines elektrischen Heizers in dem Reinigungssystem 3 verwendet.

Insgesamt wird der Kolonne bzw. der Niederdrucksäule 12 im Zuge des simulierten Luftzerlegung Luft (AIR) zugeführt und zumindest Sauerstoff und Stickstoff jeweils gasförmig (GOX, GAN) und/oder flüssig (LOX, LIN) entnommen. Weiterhin wird üblicherweise Unreinstickstoff (UN2) abgezogen und gewünschtenfalls Edelgase wie Argon usw.

Wie oben erläutert, wird im Rahmen des Verfahrens eine Vielzahl derartiger Prozesssimulationen simultan durchgeführt, jeweils für verschiedene Anwendungsfälle.

Zum Bereitstellen der Vielzahl von Prozesssimulationen werden insbesondere die Werte verschiedener Prozessparameter verändert, so dass unterschiedliche Prozessvarianten simuliert werden. Beispielsweise werden als derartige Prozessparameter eine Eduktmenge und Eduktqualität verändert. Für eine Veränderung der Eduktmenge kann beispielsweise ein Volumen- oder Massenstrom bzw. eine Durchflussrate der mittels des Hauptluftverdichters 1 angesaugten Einsatzluft verändert werden. Als Eduktqualität kann beispielsweise die Temperatur der Luft verändert werden oder es können Verunreinigungen in der Luft verändert werden.

Ferner werden als Prozessparameter beispielsweise Produktmengen und Produktqualitäten verändert, beispielsweise Mengen und Zusammensetzungen des aus der Niederdrucksäule 12 abgezogenen flüssigen Stickstoffs und des flüssigen Sauerstoffs.

Die Produktmengen und Produktqualitäten werden für die einzelnen Simulationen insbesondere mit einer spezifischen Gewichtung versehen. Je höher die anteiligen Werte für diese Gewichtung, desto wichtiger ist die Vorgabe dieses Prozessparameters.

Weiterhin werden für die Vielzahl der Simulationen als Wert für die Prozessanlagengröße beispielsweise die gesamte Wärmeübertragerfläche sowie deren Aufteilung zwischen Seitenabzügen des Hauptwärmetauschers 5 verändert. Der Wärmeübergangskoeffizient des Hauptwärmetauschers 5 ist in erster Näherung beispielsweise von der Strömungsgeschwindigkeit und der Zusammensetzung der Ströme abhängig. Die relative, geometrische Lage von Seitenabzügen sowie die verwendete Baugröße des Wärmeübertrages sind in allen Simulationen gleich (abhängige Werte).

Als weitere Prozessanlagengröße werden Strömungsquerschnitte verändert, beispielsweise Strömungsquerschnitte der Teilströme stromab des Reinigungssystems 3. Druckverluste in Rohrleitungen und Apparaten sind in erster Näherung von der Strömungsgeschwindigkeit abhängig.

Weiterhin werden als Prozessanlagengröße Höhe und Durchmesser der Kolonne bzw. der Niederdrucksäule 12 verändert. Die Wirksamkeit des Stoffübergangs ist dabei von der Gas- und Flüssigkeitsbelastung abhängig, der Druckverlust von der Strömungsgeschwindigkeit, dem Typ des Bodens und der theoretischen Bodenzahl.

Der Wirkungsgrad der Luftzerlegungsanlage ist insbesondere von den optimalen Betriebspunkten, den Massenströmen, den Saug- und Enddrücken und von den Eintritts- bzw. Zwischenkühltemperaturen in den eingesetzten Verdichtern abgängig. Diese Prozessanlagengrößen bzw. der Designpunkt der Verdichter, in der Regel der optimale Betriebspunkt, werden ebenfalls im Zuge der Simulationen verändert.

Weiterhin können für die Simulationen Randbedingungen vorgegeben werden, beispielsweise thermische Spannungen in dem Hauptwärmetauscher 5, hydraulische Begrenzungen z.B. der Flutpunkte von Kolonneneinbauten, sowie Pump- und Belastungsgrenzen der Hauptluftverdichter 1, der Nachverdichter 4, der Drosseleinrichtung 7 und der Pumpe 8.

Durch die Veränderung der entsprechenden Prozessanlagengrößen werden somit jeweils verschiedene Ausgestaltungen bzw. Prozesstopologien der Luftzerlegungsanlage simuliert. Durch die Veränderung der entsprechenden Prozessparameter werden jeweils verschiedene Prozessvarianten bzw. Betriebsfälle simuliert. Insbesondere wird im Zuge der Vielzahl von Simulationen für jede der verschiedenen Prozesstopologien der Luftzerlegungsanlage jede Prozessvariante simuliert.

Insbesondere werden die Abhängigkeiten der verschiedenen Betriebsfälle untereinander in den Simulationen simultan implementiert. Somit sind beispielsweise Korrelationen der Veränderungen der Werte der Prozessanlagengrößen sowie der Prozessparameter parallel bzw. simultan in den einzelnen Prozesssimulationen implementiert. Insbesondere sind somit Korrelationen bzw. Abhängigkeiten einzelner Betriebsfälle bzw. einzelner Prozessvarianten untereinander implementiert.

Die Vielzahl von Prozesssimulationen wird simultan durchgeführt, indem der Vielzahl von Prozesssimulationen zugrunde liegende Gleichungen als gemeinsames Gleichungssystem gelöst werden. Dabei werden optimale Werte für die Prozessanlagengrößen und für die Prozessparameter derart bestimmt, dass vorgegebene Bedingungen erfüllt sind. Die einzelnen durchgeführten Prozesssimulationen werden zu diesem Zweck simultan über eine gemeinsame Zielfunktion optimiert. Diese Zielfunktion setzt sich beispielsweise aus den Kriterien Betriebsmittelbedarf, Betriebskosten und Investitionskosten zusammen.

Indem die einzelnen durchgeführten Prozesssimulationen simultan über diese gemeinsame Zielfunktion optimiert werden, werden optimale Werte für die Prozessanlagengrößen und die Prozessparameter bestimmt, so dass als vorgegebene Bedingungen erfüllt sind, dass der Betriebsmittelbedarf, die Betriebskosten und die Investitionskosten jeweils möglichst klein sind.

Gemäß den auf diese Weise bestimmten optimalen Werten für die entsprechenden Prozessanlagengrößen und die entsprechenden Prozessparameter wird eine Dimensionierung gefunden, gemäß welcher die Luftzerlegungsanlage gebaut und betrieben wird.

Somit wird eine Auswahl einer geeigneten Topologie durch simultane Optimierung einer Vielzahl möglicher Prozessvarianten unter exakt den gleichen Randbedingungen durchgeführt. Ferner wird eine Minimierung des Bedarfs an Betriebsmitteln, Betriebskoten bzw. Investitionskosten unter Berücksichtigung einer Vielzahl möglicher Betriebsfälle ein und derselben Prozesstopologie durchgeführt.

**Patentansprüche**

1. Verfahren zum Dimensionieren und Errichten einer Prozessanlage zum Durchführen eines chemischen, verfahrenstechnischen Prozesses, nämlich einer Luftzerlegungsanlage oder einer Erdgasanlage zur Erdgasverflüssigung, umfassend ein

computerimplementiertes Verfahren zum Dimensionieren der Prozessanlage,
wobei eine Vielzahl von Prozesssimulationen parallel durchgeführt wird, im Zuge derer jeweils der Prozess in der Prozessanlage jeweils für einen bestimmten Anwendungsfall simuliert wird,
wobei jeder Anwendungsfall durch Werte von Prozessanlagengrößen und/oder Werte von Prozessparametern charakterisiert ist, 1f
wobei verschiedene Werte für die Prozessanlagengrößen verschiedene Prozessanlagentopologien und konkrete Ausgestaltung der Prozessanlage charakterisieren,
wobei die Prozessparameter Betriebsfälle charakterisieren, gemäß welchen die Prozessanlage gefahren werden kann oder gemäß welchen der Prozess in der Prozessanlage durchgeführt wird,
wobei die Vielzahl von Prozesssimulationen parallel durchgeführt wird, indem der Vielzahl von Prozesssimulationen zugrundeliegende Gleichungen als gemeinsames Gleichungssystem gelöst werden, in welchem wenigstens zwei unterschiedliche Lastsituationen enthalten sind,
wobei in der Vielzahl von Prozesssimulationen Werte für die Prozessanlagengrößen und für die Prozessparameter derart bestimmt werden, dass wenigstens eine vorgegebene Bedingung erfüllt ist,
wobei freie Werte für Prozessanlagengrößen und/oder Prozessparameter bestimmt werden und wobei abhängige Werte für Prozessanlagengrößen und/oder Prozessparameter aus den freien Werten für Prozessanlagengrößen und/oder Prozessparameter bestimmt werden, wobei ein abhängiger Wert einer Prozessanlagengröße bzw. eines Prozessparameters in einer der Vielzahl von Prozesssimulationen von einem freien Wert einer Prozessanlagengröße bzw. eines Prozessparameters in einer anderen der Vielzahl von Prozesssimulationen abhängt, 1f
wobei abhängige Werte konstruktive Parameter, nämlich Prozessanlagengrößen betreffen, welche der Optimierung einmal als freier Wert zugänglich sind, aber in allen Prozesssimulationen gleich sind und daher in den anderen Prozesssimulationen vom ersten Wert abhängig, nämlich mit diesem identisch sind,
wobei der Vielzahl von Prozesssimulationen jeweils ein Gewichtungsfaktor zugeordnet wird, der das Gewicht einer bestimmten Lastsituation am Gesamtbetrieb kennzeichnet,

wobei für die optimale Wahl der freien Werte ein gradientenbasiertes Optimierungsverfahren verwendet wird, welches auf der Auswertung einer analytischen oder numerisch erzeugten Jakobi-Matrix beruht,
wobei die Prozessanlage gemäß der gewählten Dimensionierung
an einem Standort errichtet und in Betrieb genommen wird.

2. Verfahren nach Anspruch 1,
wobei als Prozessparameter für die Simulationen eine oder mehrere der folgenden Größen verwendet werden:

- eine Produktmenge,
- eine Produktqualität,
- eine Eduktmenge,
- eine Eduktqualität,
- eine Umgebungsbedingung,
- ein Energiepreis,
- eine Vergütungsbedingung,
- eine Verfügbarkeit von Komponenten der Prozessanlage,
- bauliche oder transportbedingte Randbedingungen an verfahrenstechnische Komponenten der Prozessanlage.

3. Verfahren nach einem der vorstehenden Ansprüche, wobei die wenigstens eine vorgegebene Bedingung von wenigstens einer Kostengröße abhängt

4. Verfahren nach Anspruch 3, wobei die wenigstens eine vorgegebene Bedingung erfüllt ist, wenn die wenigstens eine Kostengröße eine Schwelle nicht über- oder unterschreit und/oder möglichst groß oder möglichst klein ist.

5. Verfahren nach Anspruch 3 oder 4, wobei eine oder mehrere der folgenden Größen als die wenigstens eine Kostengröße verwendet werden:

- ein Bedarf an Betriebsmitteln,
- ein Bedarf an Energie,
- ein Produktbedarf,
- eine Eduktverfügbarkeit,
- Betriebskosten,
- Investitionskosten,
- Einhaltung von Baubarkeitsbeschränkungen,
- Produktausbeuten,
- Einsatzstoffmengen,
- eine Prozessanlagenbelastung,
- eine Prozessanlagenlebensdauer.

6. Verfahren nach einem der vorstehenden Ansprüche, wobei als Prozessanlagengrößen eine oder mehrere einen Wärmeübertrager (5) der Prozessanlage charakterisierende Größen verwendet werden, insbesondere eine gesamte Wärmeübertragerfläche und/oder eine Aufteilung von Wärmeübertragerflächen zwischen Seitenabzügen.

7. Verfahren nach einem der vorstehenden Ansprüche, wobei als Prozessanlagengrößen eine oder mehrere eine Fluidströmung durch die Prozessanlage beeinflussende Größe verwendet wird, insbesondere ein Strömungsquerschnitt und/oder ein Durchmesser eines Elements der Prozessanlage.

8. Verfahren nach einem der vorstehenden Ansprüche, wobei als Prozessanlagengrößen eine oder mehrere Dimensionen der Prozessanlage verwendet werden, insbesondere ein Kolonnendurchmesser und/oder eine Kolonnenhöhe.

9. Verfahren nach einem der vorstehenden Ansprüche, wobei als Prozessanlagengrößen eine oder mehrere einen Wirkungsgrad des Prozesses beeinflussende Größe verwendet wird, insbesondere ein Designpunkt der Prozessanlage und deren Komponenten.

10. Verfahren nach einem der vorstehenden Ansprüche, wobei Randbedingungen für Komponenten der Prozessanlage vorgegeben sind.

**Claims**

1. A method for dimensioning and erecting a process plant for carrying out a chemical engineering process, namely an air separation plant or a natural gas plant for natural gas liquefaction, comprising a computer-implemented method for dimensioning the process plant,

   wherein a multiplicity of process simulations is carried out in parallel, in the course of each of which the process in the process plant is in each case simulated for a particular application case, wherein each application case is **characterized by** values of process plant variables and/or values of process parameters,
   wherein different values for the process plant variables characterize different process plant topologies and specific embodiment of the process plant,
   wherein the process parameters characterize operating cases in accordance with which the process plant can be run or in accordance with which the process is carried out in the process plant,
   wherein the multiplicity of process simulations is performed in parallel by solving equations underlying the multiplicity of process simulations as a common equation system in which at least two different load situations are contained,

   wherein, in the multiplicity of process simulations, values for the process plant variables and for the process parameters are determined in such a way that at least one predefined condition is met, wherein free values for process plant variables and/or process parameters are determined, and wherein dependent values for process plant variables and/or process parameters are determined from the free values for process plant variables and/or process parameters,
   wherein a dependent value of a process plant variable or of a process parameter in one of the multiplicity of process simulations depends upon a free value of a process plant variable or of a process parameter in another of the multiplicity of process simulations,
   wherein dependent values relate to constructive parameters, namely process plant variables, which are accessible to the optimization once as a free value, but are the same in all process simulations and therefore dependent upon the first value in the other process simulations, namely are identical to it, wherein the multiplicity of process simulations is each assigned a weighting factor which characterizes the weight of a certain load situation in the overall operation,
   wherein a gradient-based optimization method is used for the optimal selection of the free values, which optimization method is based upon the evaluation of an analytical or numerically generated Jacobian matrix,
   wherein the process plant is erected and put into operation at a location in accordance with the selected dimensioning.

2. The method according to claim 1,
   wherein one or more of the following variables are used as process parameters for the simulations:

   - a product quantity,
   - a product quality,
   - an educt quantity,
   - an educt quality,
   - an environmental condition,
   - an energy price,
   - a remuneration condition,
   - an availability of components of the process plant,
   - structural or transport-related boundary conditions on process engineering components of the process plant.

3. The method according to any one of the preceding claims, wherein the at least one predefined condition depends upon at least one cost variable.

4. The method according to claim 3, wherein the at least one predefined condition is met if the at least one cost variable does not exceed or fall below a threshold and/or is as large as possible or as small as possible.

**5.** The method according to claim 3 or 4, wherein one or more of the following variables are used as the at least one cost variable:

    - a need for resources,
    - a need for energy,
    - a product need,
    - an educt availability,
    - operating costs,
    - investment costs,
    - compliance with design constraints,
    - product yields,
    - input material quantities,
    - a process plant load,
    - a process plant service life.

**6.** The method according to any one of the preceding claims, wherein one or more variables characterizing a heat exchanger (5) of the process plant are used as process plant variables, in particular a total heat exchanger surface area and/or a division of heat exchanger surface areas between side offtakes.

**7.** The method according to any one of the preceding claims, wherein one or more variables influencing a fluid flow through the process plant are used as process plant variables, in particular a flow cross-section and/or a diameter of an element of the process plant.

**8.** The method according to any one of the preceding claims, wherein one or more dimensions of the process plant are used as process plant variables, in particular a tower diameter and/or a tower height.

**9.** The method according to any one of the preceding claims, wherein one or more variables influencing an efficiency of the process are used as process plant variables, in particular a design point of the process plant and its components.

**10.** The method according to any one of the preceding claims, wherein boundary conditions for components of the process plant are predefined.

**Revendications**

**1.** Procédé permettant le dimensionnement et la construction d'une installation de traitement pour la mise en oeuvre d'un traitement chimique en termes de technique de procédé, à savoir une installation de séparation d'air ou une installation de gaz naturel pour la liquéfaction de gaz naturel, comprenant un procédé implémenté par ordinateur permettant le dimensionnement de l'installation de traitement,

dans lequel une pluralité de simulations de traitement sont mises en oeuvre en parallèle, au cours desquelles le traitement dans l'installation de traitement est simulé pour un cas d'utilisation déterminée,
dans lequel chaque cas d'utilisation est **caractérisé par** des valeurs de variables d'installation de traitement et/ou des valeurs de paramètres de traitement,
dans lequel différentes valeurs pour les dimensions d'installation de traitement caractérisent différentes topologies d'installation de traitement et différentes configurations concrètes de l'installation de traitement,
dans lequel les paramètres de traitement caractérisent des cas de fonctionnement selon lesquels l'installation de traitement peut être conduite ou selon lesquels le traitement est mis en oeuvre dans l'installation de traitement,
dans lequel la pluralité de simulations de traitement sont mises en oeuvre en parallèle, en résolvant des équations à la base de la pluralité de simulations de traitement sous forme de système d'équations commun, dans lequel au moins deux situations de charge différentes sont contenues,
dans lequel, dans la pluralité de simulations de traitement, des valeurs sont déterminées pour les variables d'installation de traitement et pour les paramètres de traitement de telle sorte qu'au moins une condition prédéfinie est remplie,
dans lequel des valeurs libres pour les variables d'installation de traitement et/ou les paramètres de traitement sont déterminées et dans lequel des valeurs dépendantes pour les variables d'installation de traitement et/ou les paramètres de traitement sont déterminées à partir des valeurs libres pour les variables d'installation de traitement et/ou les paramètres de traitement,
dans lequel une valeur dépendante d'une variable d'installation de traitement ou d'un paramètre de traitement dans l'une simulation de traitement parmi la pluralité de simulations de traitement dépend d'une valeur libre d'une variable d'installation de traitement ou d'un paramètre de traitement dans une autre simulation de traitement parmi la pluralité de simulations de traitement,
dans lequel des valeurs dépendantes concernent des paramètres constructifs, à savoir des variables d'installation de traitement, lesquels sont accessibles à l'optimisation une fois comme valeur libre mais sont identiques dans toutes les simulations de traitement et sont donc dépendantes de la première valeur dans les autres simulations de traitement, à savoir identiques à celle-ci, dans lequel un facteur de pondération est respectivement attribué à la pluralité de simulations de traitement, lequel qualifie le poids d'une situation de charge déterminée dans le fonctionnement global,
dans lequel un procédé d'optimisation basé sur un gradient est utilisé pour le choix optimal des valeurs libres, lequel repose sur l'évaluation d'une matrice de Jacobi analytique ou générée numériquement,
dans lequel l'installation de traitement est construite et mise en service sur un site conformément au dimensionnement choisi.

2. Procédé selon la revendication 1,
dans lequel une ou plusieurs des variables suivantes est utilisée comme paramètre de traitement pour les simulations :

   - une quantité de produit,
   - une qualité de produit,
   - une quantité de réactif,
   - une qualité de réactif,
   - une condition d'environnement,
   - un prix de l'énergie,
   - une condition de rémunération,
   - une disponibilité des composants de l'installation de traitement,
   - des conditions marginales liées au bâtiment ou au transport des composants en termes de technique de procédé de l'installation de traitement.

3. Procédé selon l'une des revendications précédentes, dans lequel l'au moins une condition prédéfinie dépend d'au moins une variable de coût.

4. Procédé selon la revendication 3, dans lequel l'au moins une condition prédéfinie est remplie si l'au moins une variable de coût ne surpasse pas ou n'atteint pas un seuil et/ou est aussi grande que possible ou aussi petite que possible.

5. Procédé selon la revendication 3 ou 4, dans lequel une ou plusieurs des variables suivantes sont utilisées comme l'au moins une variable de coût :

   - un besoin en ressources,
   - un besoin en énergie,
   - un besoin de produit,
   - une disponibilité de réactif,
   - des coûts de fonctionnement,
   - des coûts d'investissement,
   - respect des restrictions de constructibilité,
   - rendements de produit,
   - quantités de matière première,

   - une charge d'installation de traitement,
   - une durée de vie d'installation de traitement.

6. Procédé selon l'une des revendications précédentes, dans lequel une ou plusieurs variables caractérisant un échangeur de chaleur (5) de l'installation de traitement, en particulier une surface totale d'échangeur de chaleur et/ou une répartition de surfaces d'échangeur de chaleur entre des extractions latérales, sont utilisées comme variables d'installation de traitement.

7. Procédé selon l'une des revendications précédentes, dans lequel une ou plusieurs variables influençant un écoulement de fluide à travers l'installation de traitement, en particulier une section transversale d'écoulement et/ou un diamètre d'un élément de l'installation de traitement, sont utilisées comme variables d'installation de traitement.

8. Procédé selon l'une des revendications précédentes, dans lequel une ou plusieurs dimensions de l'installation de traitement, en particulier un diamètre de colonne et/ou une hauteur de colonne, sont utilisées comme variables d'installation de traitement.

9. Procédé selon l'une des revendications précédentes, dans lequel une ou plusieurs variables influençant un degré d'efficacité du traitement, en particulier un point de conception de l'installation de traitement et de ses composants, sont utilisées comme variables d'installation de traitement.

10. Procédé selon l'une des revendications précédentes, dans lequel les conditions marginales pour les composants de l'installation de traitement sont prédéfinies.

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 17020477

- DE 102017010787

### In der Beschreibung aufgeführte Nicht-Patentliteratur

- **GADE PANDU RANGAIAH**. Multi-Objective Optimization in Chemical Engineering. *Developments and Applications*, 20 March 2013
- **PAINTON et al.** *Synthesizing optimal design configurations for a Brayton cycle power plant*, 27 September 1993

- **KRAUME** ; **MATTHIAS**. Transportvorgänge in der Verfahrenstechnik: Grundlagen und apparative Umsetzungen. Springer Vieweg, 2012, vol. 2